Europäisches Patentamt

European Patent Office

Office européen des brevets

(19)

(11) **EP 1 205 678 A1**

(12) **EUROPEAN PATENT APPLICATION**

(43) Date of publication:
**15.05.2002 Bulletin 2002/20**

(51) Int Cl.⁷: **F16C 32/06**

(21) Application number: **01309105.3**

(22) Date of filing: **26.10.2001**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **07.11.2000 US 706832**

(71) Applicant: **INGERSOLL-RAND COMPANY
Woodcliff Lake, NJ 07675 (US)**

(72) Inventors:
• **Haugen, Ronald L.
Mayfield, Kentucky 42066 (US)**
• **Chen, Wen Jeng
Mayfield, Kentucky 42066 (US)**

(74) Representative: **Every, David Aidan et al
MARKS & CLERK,
Sussex House,
83-85 Mosley Street
Manchester M2 3LG (GB)**

(54) **Gas bearing**

(57)    A gas bearing, which may serve as either a thrust or radial bearing is provided. The bearing has two bearing surfaces which form a passage and through which pressurized gas flows across bearing surfaces. The passage is wider at its inlet than at its outlet. As the pressurized gas flows through the bearing, its pressure increases due to the narrowing of the passage. The bearing effectively combines the principles of hydrostatic and hydrodynamic bearings to increase the load carrying capacity of the bearing.

Fig. 1

## Description

## BACKGROUND

The present invention is directed to bearings for rotating machinery. In particular, the present invention relates to gas bearings for high speed rotating equipment.

Conventional centrifugal compressors include an impeller attached to a rotor that turns at high speeds for compressing air or other fluid. Bearings (i.e. thrust and jounal bearings) that support and locate the impeller/rotor assembly are critical components that dramatically affect the compressor's cost and performance. For most compressor designs, the combination of the high rotor speed and the large bearing loads exceeds the capability of conventional ball bearings. Therefore, many compressors employ fluid bearings (e.g. oil bearings) supplied by a separate lubrication system. These oil fed bearings add additional cost and complexity to the compressor design due to the large amount of auxiliary equipment required for the oil system such as, for example, pumps, filters, oil sumps and relief valves. In certain situations, magnetic bearings have been used. Magnetic bearings eliminate most of the auxiliary equipment associated with the oil fed bearings, however, magnetic bearings are very expensive and require complex and costly electronic support equipment. Gas bearings appear to avoid many of the advantages associated with the more conventional bearings, such as complexity and cost. However, known gas and air bearings are limited by unacceptably small load carrying capabilities.

An example of a known gas bearing design is disclosed in U.S. Patent No. 2,671,700 to Seyffert. Seyffert discloses an air bearing for use with a a centrifugal compressor. However, the disclosed bearing presents a classic "hydrostatic" bearing design in which the bearing load capacity is substantially the same regardless of the rotor's rotational speed.

Another known design is a dynamic gas bearing where gas or air flows across the bearing. Conventional dynamic gas bearings are limited in load carrying capacity and, thus, have limited practical utility.

In the hydrostatic design of Seyffert, unlike a dynamic bearing, the gas or air at the bearing does not flow across the bearing. As a result, the bearing cannot adapt its load capacity to match the rotor's rotational speed. Accordingly, the applicability of the Seyffert bearing is limited to particular low-speed rotations of the rotor.

In addition to the bearing system, most centrifugal compressors include a gas and lubricant seal positioned between the impeller and the thrust and journal bearings associated with the shaft. The seal prevents the pressurized fluid from escaping the housing or casing surrounding the compressor. On one side of the seal, the gas pressure is approximately equal to the static discharge pressure of the impeller. The other side of the seal is typically near atmospheric pressure. Conventional compressor designs place a gas seal between the impeller and the bearings to prevent the pressurized fluid from reaching the bearings.

Therefore, there remains a need for a gas bearing for use in highspeed and high load compressor applications.

## SUMMARY

In addressing the problems inherent in the prior art, the invention is directed to a centrifugal compressor that includes a compressor casing through which a rotor is passed. An impeller, attached to the rotor and located within the casing, is configured to produce highly pressurized air continuously when the rotor is rotated. A seal is provided between the rotor and the casing to minimize air leakage out of the casing between the rotor and the casing.

An air bearing, which may be a thrust or radial bearing may be positioned between the rotor and the casing. The bearing has two sides which form a passage and which carry the highly pressurized gas from the impeller. The passage is wider at its inlet, into which the highly pressurized gas flows from the impeller, than at its outlet. As the highly pressurized gas flows through the passage, its pressure increases due to the narrowing of the passage. One side of the air bearing may be a rotatable shaft (e.g. the rotor) and the other side of the bearing may be a casing or housing that encloses the impeller. The highly pressurized gas supplied into the passage serves to reduce the frictional force, which exists between the bearing sides when the shaft is rotated, in both the axial and the radial directions of the shaft.

According to the present invention a centrifugal compressor is provided. The compressor comprises a compressor casing; a rotor passing through the casing; an impeller attached to the rotor and located within the casing, the impeller being configured to produce pressurized gas. The compressor further includes a first bearing positioned between the rotor and the casing, the first bearing having a first bearing surface and a second bearing surface, the first and second bearing surfaces configured to form a passage for carrying the pressurized gas produced by the impeller, the passage being narrower at an outlet end than at an inlet end. Preferably, the compressor includes a seal for minimizing gas leakage out of the casing between the rotor and the casing. The first bearing may be a thrust bearing or a radial bearing.

In addition, the compressor may further include a second bearing, wherein the first bearing is a radial bearing, wherein the second bearing is a thrust bearing, wherein the second bearing has a first bearing surface and a second bearing surface, wherein the first and second bearing surfaces of the second bearing are configured to form a passage for carrying the pressurized gas produced by the impeller, the passage between the first and second bearing surfaces of the second bearing being narrower at an outlet end than at an inlet end. Preferably, the compressor includes a balance piston for reducing the thrust load on the first bearing.

In alternative embodiment an improved centrifugal compressor is provided. The compressor includes an impeller attached to a rotating shaft positioned to pass through a casing. The improvement comprises a gas bearing positioned so that the bearing is supplied with pressurized gas produced by the compressor and wherein the bearing is positioned in a leakage path for the pressurized gas to escape from the casing. The gas bearing may be a thrust bearing or a radial bearing. In addition, the compressor may include a balance piston for reduing the load carrying requirements of the bearing.

In a further embodiment a gas bearing system for reducing friction between adjacent surfaces is also provided. The system comprises a first bearing surface; a second bearing surface positioned to oppose the first bearing surface; a passage for carrying highly pressurized gas to a region between the first bearing surface and the second bearing surface; and a device for supplying the highly pressurized gas to the passage for carrying the highly pressurized gas, wherein the pressure of the gas increases as it flows through the region between the bearing surfaces, the gas ultimately escaping the region.

According to this system, the first bearing surface may be a rotatable shaft and the second bearing surface may be a support for the shaft. However, preferably, the device for supplying the highly pressurized gas is a centrifugal compressor. If the device for supplying the highly pressurized gas is a centrifugal compressor, the second bearing surface may be the compressor casing. In addition, if a centrifugal compressor is used to supply the highly pressurized gas, a balance piston may preferably be provided to reduce the thrust load requirements on the compressor. In this system, the first bearing surface may be positioned so that the highly pressurized gas supplied to the region between the first bearing surface and the second bearing surface reduces a frictional force between the bearing surfaces in either the axial or the radial direction of the shaft.

It is to be understood that both the foregoing general description and the following detailed description are exemplary and explanatory only, and are not restrictive of the invention as claimed.

## BRIEF DESCRIPTION OF THE DRAWINGS

These and other features, as aspects, and advantages of the present invention will become apparent from the following description, appended claims, and the accompanying exemplary embodiment shown in the drawings, which are briefly described below.

Fig. 1 is a simplified cross-sectional view along the rotor of a centrifugal compressor having radial and thrust gas bearings according to the present invention;

Fig. 2 is a simplified representation of a gas bearing according to the present invention which tapers from an inlet to an outlet.

## DETAILED DESCRIPTION

The present invention overcomes the disadvantages of conventional compressor bearings by providing an air bearing which is a hybrid hydrostatic/hydrodynamic bearing. According to the present invention, the load carrying capacity of the bearing is influenced not only by the rotational speed of the rotor, but also by the geometry of the bearing and the initial gas pressure.

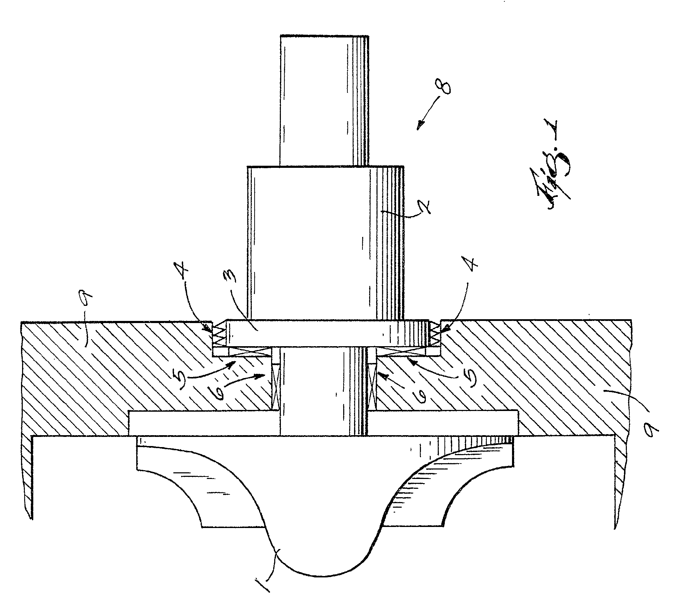

Figure 1 shows a cross-sectional view of a centrifugal compressor or pump 8. The compressor 8 includes an impeller 1 attached to a high speed rotor 2. The impeller 1 is located within a housing or casing 9 and the rotor passes through the casing 9. A seal 4 is preferably positioned between the casing 9 and the shaft 2 to prevent compressed gas from escaping from the casing 9. The seal 4 may include a conventional design such as a labyrinth.

The compressor 8 may also include thrust bearings 5 and radial (i.e. journal) bearings 6. In the example shown in Fig. 1, the thrust bearings 6 may be located immediately adjacent to the impeller 1 and prior to the gas seal 4. The radial bearings 5 may also be positioned immediately adjacent to the impeller 1 and the thrust bearings 6 and prior to the gas seal 4. The radial bearings 5 typically circumscribe the axis of rotation 7 of the rotor 2. The compressor may also include an optional balance piston 3 may be used to reduce the thrust load requirements on the compressor 8.

The air or gas bearings are preferably positioned to permit the high pressure gas produced by the impeller 1 to directly supply the bearings. As shown in Fig. 1, the bearings are positioned in the natural leakage path for the high pressure air out of the casing. As a result, in some cases, it may be desirably to modify or eliminate the seal 4 to encourage a certain flow of pressurized gas through the bearings to improve the performance of the bearings.

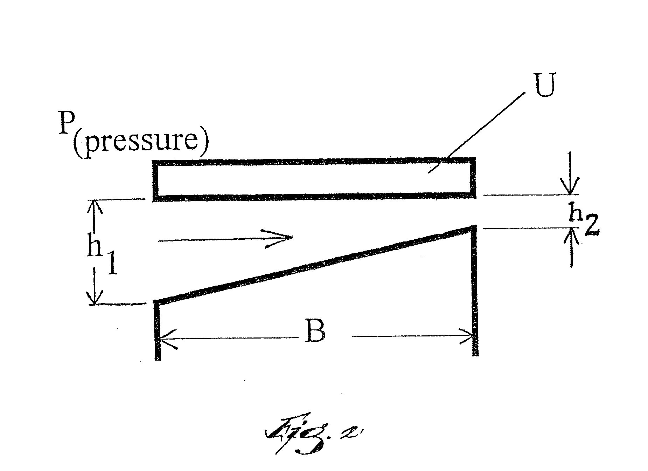

Operation of the bearing will now be described with reference to Fig. 2. The bearing may be supplied with gas compressed by the impeller to an impeller discharge pressure. The bearing cross-section shown in Fig. 2 has a length B and with an inlet width $h_1$ which is wider than an outlet width $h_2$. The bearing has a pressure P which increases along the length of the bearing B in the direction of outlet $h_2$. The Reynolds equation for the gas flow through the bearing may be simplified by assuming an infinite length so that the one-dimensional equation becomes:

$$\frac{d\,[Ph^3 \cdot dP/dx]}{dx} = (6\mu U) \cdot \frac{d(Ph)}{dx}$$

(where U is the velocity of the runner and a μ is the velocity of the gas). For example, in a centrifugal compressor U would be the rotational speed of the rotor bearing surface. The equation may be integrated and solved for the load carrying capacity per unit length of the bearing at high speeds.:

$$\frac{W}{L} = \frac{(P_1 h_1 B) \cdot [\ell\eta(h_1/h_2) + h_2/h_1 - 1]}{[h_1 - h_2]}$$

The equation demonstrates that at high speeds, the load carrying capacity is directly proportional to the pressure of the gas, which surrounds the bearing, $P_1$. The configuration ensures that the density of the gas increases along the length of the bearing to the narrowing of the passage.

While many multistage centrifugal compressors operate with discharge pressures of over 600 psig; more commonly, the discharge pressure is approximately 125 psig. In these compressors, the impeller discharge pressure depends on the number of stages and on the inlet and the final discharge pressure. Typically, the impeller discharge pressure ranges between 1.4 and 2.5 times atmospheric pressure for the first stage of two and four stage compressors respectively and eight times atmospheric pressure for the final compression stage.

As described above, the load carrying capacity of the bearings is proportional to the pressure to which the gas bearing is exposed. As a result, the load capacity will be may be increased by a factor of up to eight times by supplying the bearing with pressurized air from the discharge of the compressor. The increase in load carrying capacity is valid for both radial bearings and thrust bearings. Unlike conventional gas bearings, these improved bearings are dynamic gas bearings supplied by pressurized gas, a combination of characteristics not present in the prior art.

A further improvement is possible by utilizing the pressure from the highpressure stages on the lower pressure stages. High pressure gas may be supplied to bearings associated with a lower pressure stage in order to increase bearing performance. For example, with reference to Fig. 1, a second gas seal may be positioned on the impeller side of the radial bearing 6, and high pressure gas for the bearing supplied through a separate supply passage provided in the casing 9. Thus, in the multistage compressor example, high pressure gas from a later stage may be provided to the bearings associated with a lower pressure earlier stage in order to improve bearing performance and load carrying capacity.

The bearing described above, may be characterized as a hybrid hydrostatic/hydrodynamic bearing. The bearing is partially hydrostatic because its load carrying capacity W per unit length L is proportional to the inlet air pressure $P_1$, and is, therefore, approximately independent of the rotational speed of the rotor at start-up when rotational effects are non-existent. However, the bearing is also partially hydrodynamic because as an increase in the rotational speed of the rotor increases the inlet pressure $P_1$ to the bearing, the load capacity W per unit length L correspondingly increases.

Given the disclosure of the present invention, one versed in the art would appreciate that there may be other embodiments and modifications within the scope and spirit of the present invention. Accordingly, all modifications attainable by one versed in the art from the present disclosure within the scope and spirit of the present invention are to be included as further embodiments of the present invention. The scope of the present invention is to be defined as set forth in the following claims.

## Claims

1. A centrifugal compressor comprising:

   a compressor casing;
   a rotor passing through the casing;
   an impeller attached to the rotor and located within the casing, the impeller being configured to produce pressurized gas; and
   a first bearing positioned between the rotor and the casing, the first bearing having a first bearing surface and a second bearing surface, the first and second bearing surfaces configured to form a passage for carrying the pressurized gas produced by the impeller, the passage being narrower at an outlet end than at an inlet end.

2. The compressor of Claim 1, further comprising:

   a seal for minimizing gas leakage out of the casing between the rotor and the casing.

3. The compressor of Claim 1 wherein the first bearing is a thrust bearing.

4. The compressor of Claim 1 wherein the first bearing is a radial bearing.

5. The compressor of Claim 1, further comprising a second bearing, wherein the first bearing is a radial bearing, wherein the second bearing is a thrust bearing, wherein the second bearing has a first bearing surface and a second bearing surface, wherein the first and second bearing surfaces of the second bearing are configured to form a passage for carrying the pressurized gas produced by the impeller, the passage between the first and second bearing surfaces of the second bearing being narrower at an outlet end than at an inlet end.

**6.** The compressor of Claim 3, further comprising a balance piston for reducing the thrust load on the first bearing.

**7.** In a centrifugal compressor having an impeller attached to a rotating shaft positioned to pass through a casing, the improvement comprising a gas bearing positioned so that the bearing is supplied with pressurized gas produced by the compressor and wherein the bearing is positioned in a leakage path for the pressurized gas to escape from the casing.

**8.** The compressor of Claim 7, wherein the gas bearing is a thrust bearing.

**9.** The compressor of Claim 7, wherein the gas bearing is a radial bearing.

**10.** The compressor of Claim 8, the improvement further comprising a balance piston, wherein the balance piston reduces the load carrying requirements of the bearing.

**11.** A gas bearing system for reducing friction between adjacent surfaces comprising:

a first bearing surface;
a second bearing surface positioned to oppose the first bearing surface;
a passage for carrying pressurized gas to a region between the first bearing surface and the second bearing surface; and
a device for supplying the highly pressurized gas to the passage for carrying the highly pressurized gas, wherein the pressure of the gas increases as it flows through the region between the bearing surfaces, the gas ultimately escaping the region.

**12.** The system of Claim 11, wherein the first bearing surface is a rotatable shaft.

**13.** The system of Claim 12, wherein the second bearing surface is a support for the shaft.

**14.** The system of Claim 11, wherein the device for supplying the highly pressurized gas is a centrifugal compressor.

**15.** The system of Claim 12, wherein the second bearing surface is the compressor casing.

**16.** The system of Claim 15, wherein the first bearing surface is a rotating shaft.

**17.** The system of claim 16, wherein the first bearing surface is positioned so that the highly pressurized gas supplied to the region between the first bearing surface and the second bearing surface reduces a frictional force between the bearing surfaces in the axial direction of the shaft.

**18.** The system of Claim 16, wherein the first bearing surface is positioned so that the highly pressurized gas supplied to the region between the first bearing surface and the second bearing surface reduces a frictional force between the bearing surfaces in the radial direction of the shaft.

**19.** The system of Claim 14, further comprising a balance piston, wherein the balance piston reduces the thrust load requirements of the compressor.

Fig. 1

Fig. 2

# EP 1 205 678 A1

**European Patent Office**

## EUROPEAN SEARCH REPORT

Application Number

EP 01 30 9105

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 567 129 A (BONARDI G FONDA) 22 October 1996 (1996-10-22) * the whole document * --- | 1-4,7-9, 11,13-18 | F16C32/06 |
| A | US 4 808 070 A (FONDA-BONARDI G) 28 February 1989 (1989-02-28) * the whole document * --- | 1,5,11, 12,17,18 | |
| A | DE 199 04 119 A (DRAEGER MEDIZINTECH GMBH) 17 August 2000 (2000-08-17) * column 2, line 31 - column 3, line 31; figures 1,2 * --- | 1,3,4 | |
| A | DE 24 33 624 A (SWEARINGEN JUDSON S) 13 March 1975 (1975-03-13) * page 14, line 4 - page 17, line 9; figure 1 * --- | 1 | |
| A | US 3 228 734 A (BIZZIGOTTI PIO J) 11 January 1966 (1966-01-11) * column 4, line 18 - line 50; figure 2 * ----- | 1 | TECHNICAL FIELDS SEARCHED (Int.Cl.7) F16C F01D F04D |

The present search report has been drawn up for all claims

| Place of search | Date of completion of the search | Examiner |
|---|---|---|
| BERLIN | 21 February 2002 | Hoffmann, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                          EP 01 30 9105

This annex lists the patent family members relating to the patent documents cited in the above-mentioned European search report.
The members are as contained in the European Patent Office EDP file on
The European Patent Office is in no way liable for these particulars which are merely given for the purpose of information.

21-02-2002

| Patent document cited in search report | | Publication date | Patent family member(s) | | Publication date |
|---|---|---|---|---|---|
| US 5567129 | A | 22-10-1996 | NONE | | |
| US 4808070 | A | 28-02-1989 | SE | 8802743 A | 18-02-1989 |
| DE 19904119 | A | 17-08-2000 | DE<br>DE<br>SE | 19904119 A1<br>29916336 U1<br>0000318 A | 17-08-2000<br>05-01-2000<br>04-08-2000 |
| DE 2433624 | A | 13-03-1975 | US<br>DE | 3895689 A<br>2433624 A1 | 22-07-1975<br>13-03-1975 |
| US 3228734 | A | 11-01-1966 | NONE | | |

EPO FORM P0459

For more details about this annex : see Official Journal of the European Patent Office, No. 12/82